Europäisches Patentamt

European Patent Office

Office européen des brevets

(19)

(11) Veröffentlichungsnummer: **0 119 505**
**A1**

(12) **EUROPÄISCHE PATENTANMELDUNG**

(21) Anmeldenummer: **84101796.5**

(22) Anmeldetag: **21.02.84**

(51) Int. Cl.³: **B 60 T 17/02**

(30) Priorität: 05.03.83 DE 3307832
07.07.83 DE 3324477

(43) Veröffentlichungstag der Anmeldung: **26.09.84**
**Patentblatt 84/39**

(84) Benannte Vertragsstaaten: **DE FR GB NL SE**

(71) Anmelder: **ROBERT BOSCH GMBH, Postfach 50, D-7000 Stuttgart 1 (DE)**

(72) Erfinder: **Beck, Siegfried, Stöfflerweg 8, D-7000 Stuttgart 80 (DE)**
Erfinder: **Grauel, Ingolf, Dipl.-Ing., Lessingstrasse 6, D-7143 Vaihingen/Enz (DE)**
Erfinder: **Henzler, Günther, Dipl.-Ing., Kremmlerstrasse 38, D-7000 Stuttgart 70 (DE)**

(54) **Druckluftanlage von Fahrzeugen, insbesondere Druckluftbremsanlage.**

(57) Es wird eine Druckluftanlage vorgeschlagen, bei der die Regelung des Druckniveaus über mehrere Schaltventile (11 und 12) und Schalter (14, 15, 16, 17) und einen dem Kompressor-Druckraum (1') zuschaltbaren Schaltraum (6) durchgeführt wird.

Auf diese Weise wird entsprechend den jeweiligen Betriebsgegebenheiten des Fahrzeugs Energie zur Druckluftbeschaffung eingespart, und zwar dadurch, daß das Füllen der Anlage vornehmlich in solche Phasen verlegt wird, in denen die für den Kompressor (1) erforderliche Antriebsenergie nicht dem Fahrzeugmotor sondern von der Bewegungsenergie des Fahrzeugs, z.B. bei Talfahrt, abgezweigt wird.

R. 18421 IP
21.6.1983 He/Wl

ROBERT BOSCH GMBH, 7000 Stuttgart 1

Druckluftanlage von Fahrzeugen, insbesondere
Druckluftbremsanlage

Stand der Technik

Die Erfindung geht aus von einer Druckluftanlage von Fahrzeugen, insbesondere Druckluftbremsanlage, nach dem gattungsbildenden Oberbegriff des Hauptanspruchs. Eine derartige Druckluftanlage ist bekannt (DE-OS 29 11 085). Bei
dieser bekannten Druckluftanlage ist einer Kupplung eine
von der Druckluft eines Kompressors beaufschlagbare Einrichtung zum Ausrücken der Kupplung bei Erreichen des
maximalen Betriebsdruckes zugeordnet.

Demgegenüber ist es Ziel der Erfindung, eine Druckluftanlage von Fahrzeugen gemäß gattungsbildendem Oberbegriff
zu schaffen, die eine intermittierende Drucklufterzeugung
während des Fahrzeugbetriebes auf möglichst einfache und
vor allem kostengünstige Weise ermöglicht.

Vorteile der Erfindung

Bei der erfindungsgemäßen Druckluftanlage von Fahrzeugen
mit den kennzeichnenden Merkmalen des Hauptanspruchs wird
erreicht, daß Druckluft dann gefördert wird, wenn das

...

Fahrzeug, z.B. eine Talfahrt absolviert oder im Bremsbetrieb fährt, d.h. während eines Zustandes, bei dem Energie aus dem Schiebebetrieb kostenlos zur Verfügung steht und nicht etwa von der durch den Antriebsmotor erzeugten Energie abgezweigt werden muß. Dazu kommt, daß die zusätzliche elektrische Aufschaltung eine außerordentliche Betriebssicherheit gewährleistet. Bei Ausfall der Elektrik ist der Betrieb mit der Grundschaltung in bisher üblicher Weise sichergestellt.

Desweiteren ist es von Vorteil, daß die erfindungsgemäße Einrichtung einen äußerst energiesparenden Betrieb der Anlage ermöglicht.

Zeichnung

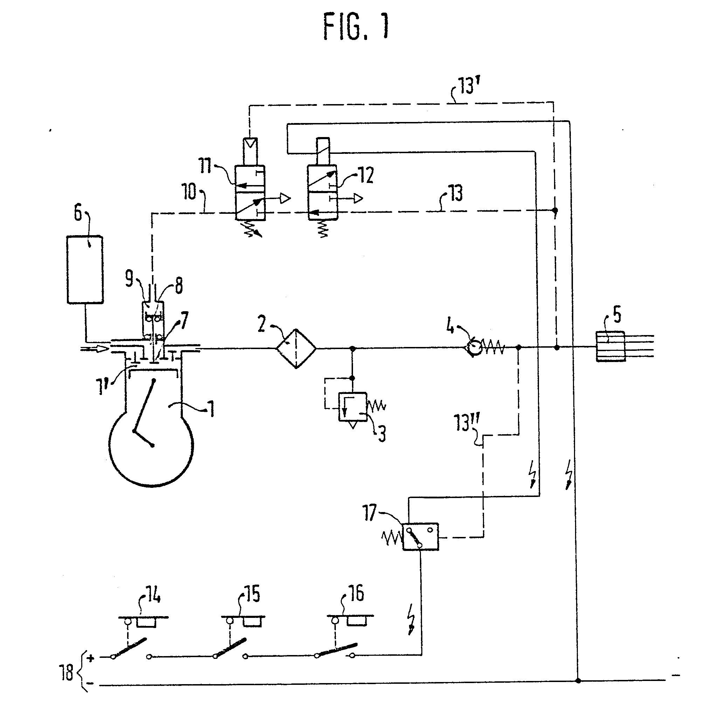

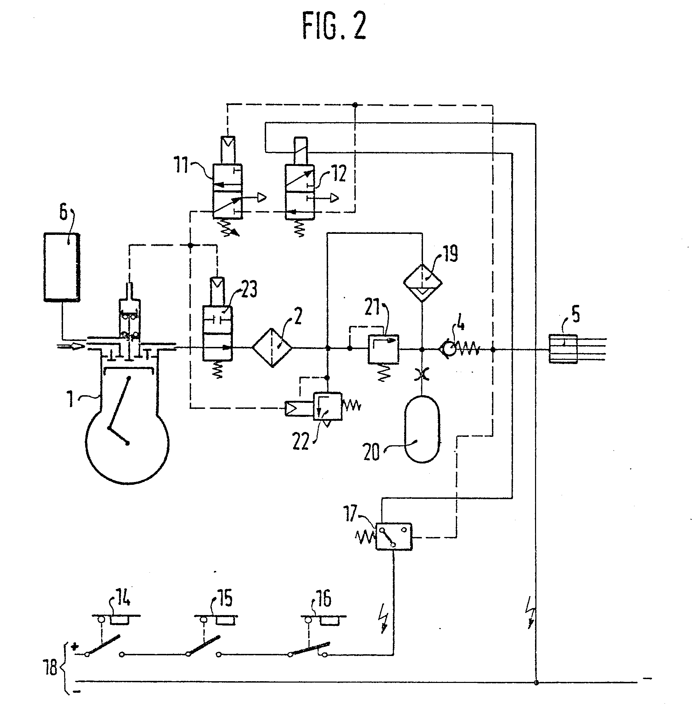

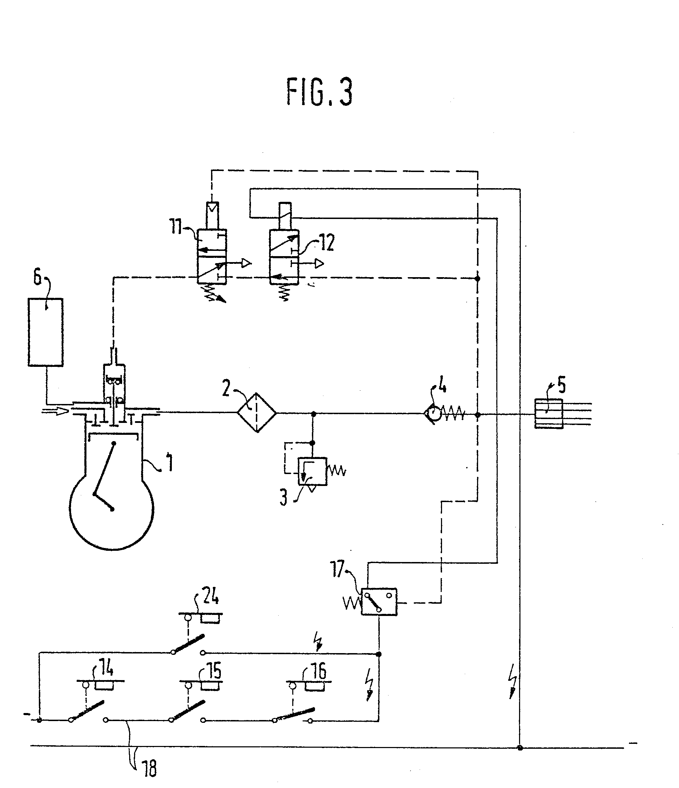

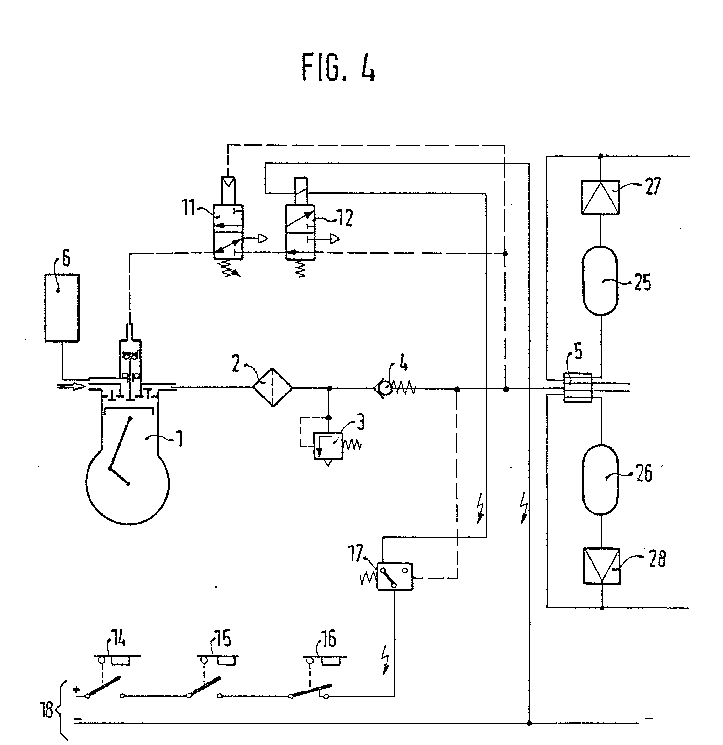

Vier Ausführungsbeispiele der Erfindung sind in der Zeichnung dargestellt. Es zeigen: Figur 1 eine Schadraumregelung mit pneumatischer Grundregelung und Luftförderung im Schiebebetrieb, Figur 2 eine Einrichtung wie Figur 1, zusätzlich mit einem Lufttrockner, Figur 3 eine Einrichtung wie Figur 1, zusätzlich mit Bremsung und Figur 4 eine Einrichtung wie Figur 1, jedoch mit Hochdruck und zusätzlich mit Druckbegrenzung.

Beschreibung der Ausführungsbeispiele

Eine Druckluft-Bremsanlage von Fahrzeugen hat einen Kompressor 1, der über ein Filter 2, ein Sicherheitsventil 3 und ein Rückschlagventil 4 an ein Vierkreis-Schutzventil 5 angeschlossen ist, über das mehrere Druckluft-Vorratsbehälter mit Druckluft versorgt werden.

...

Dem Kompressor 1 ist ein zuschaltbarer Schadraum 6 beigeordnet. Außerdem ist ein Schaltventil 7 vorgesehen, das
eine Verbindung eines Kompressor-Druckraumes 1' zum Schadraum 6 überwacht und das mit einem Schaltkolben 8 versehen
ist, der in einem Arbeitszylinder 9 angeordnet ist. Der Arbeitszylinder 9 hat über eine Steuerleitung 10 Verbindung
mit zwei Schaltventilen 11 und 12, die als 3/2-Wege-Ventile
ausgebildet sind und die eine Verbindungsleitung 13 überwachen, die von dem Vierkreis-Schutzventil 5 abgezweigt ist.
Das Schaltventil 11 wird über eine Zweigleitung 13' pneumatisch angesteuert, und das Schaltventil 12 hat eine elektrische Ansteuerung.

In der Anlage sind außerdem mehrere elektrische Schalter 14,
15, 16 und 17 vorgesehen, die alle in Reihe geschaltet sind
und die das Schaltventil 12 an eine Stromquelle 18 anschliessen. Der Schalter 14 ist von der Gaspedalstellung, der Regelstangenstellung einer Einsprichtpumpe, der Drosselklappenstellung oder dem Saugrohrdruck beeinflußt und schließt bei
Leergasstellung. Der Schalter 15 ist von einem Drehzahl-
oder Geschwindigkeitssignal beeinflußt und schließt, wenn
die Motordrehzahl die Leergasdrehzahl deutlich überschreitet.
Der Schalter 16 ist von der Stellung des Kupplungspedals,
der Gangschaltung oder von einer Zeitkonstanten beeinflußt
und öffnet, wenn die Kupplung getreten wird, und der Schalter 17 öffnet, wenn ein bestimmter maximaler Luftdruck vor
dem Vierkreis-Schutzventil 5 ansteht, und er schließt, wenn
der Luftdruck um einen geringen Betrag abfällt.

Die Anlage nach Figur 1 arbeitet wie folgt:
Der Kompressor 1 fördert bei seiner Arbeit über Filter 2,
Sicherheitsventil 3, Rückschlagventil 4 und Vierkreis-
Schutzventil 5 in die nachgeschalteten Behälter. Bei Er-

...

reichen eines oberen gewünschten Druckes in den Leitungen
13 und 13' schaltet das auf Entlüftung stehende Ventil 11
auf Durchgang, so daß Druckluft den Arbeitskolben 8 im
Arbeitszylinder 9 derart verschiebt, daß das Schaltventil
7 den Kompressor-Druckraum 1' mit dem zuschaltbaren Schaltraum 6 verbindet. Dadurch wird die Förderung des Kompressors
1 so weit vermindert, daß kein Lufttransport in die nachfolgende Anlage mehr stattfindet. Fällt jetzt der Druck auf einen unteren Wert, unterbricht das druckabhängige Schaltventil 11 die Leitungsverbindung 10 zum Arbeitskolben 8 des
Schaltventils 7 und entlüftet den Arbeitszylinder 9. Dadurch
kommt der Kompressor 1 wieder in seine Förderphase.

Dieser Arbeitszyklus wird durch Betätigung der Schalter 14,
15 und 16 insofern ergänzt, als bei Durchgangsstellung aller
Schalter und bei Durchgangsstellung des Schaltventils 11 das
Schaltventil 12 elektrisch betätigt wird und nun seinerseits
die Beaufschlagung des Arbeitskolbens 8 unterbricht und die
Leitung 13/10 entlüftet. Auch dadurch wird der Kompressor 1
auf Fördern geschaltet.

Bei Erreichen eines bestimmten maximalen Druckes in einer
zu dem Schalter 17 geführten Leitung 13" unterbricht der
Schalter 17 in jedem Fall die Stromzuführung zum Schaltventil 12, wodurch der Kompressor 1 in Leerlaufstellung geschaltet wird, indem der Schadraum 6 dem Kompressor zugeschaltet
wird.

Die Figur 2 zeigt eine ähnliche Anlage wie die Figur 1, deshalb tragen entsprechende Teile die gleichen Bezugszahlen.
Hier sind jedoch zusätzlich ein Lufttrockner 19 mit einem
Regenerations-Luftbehälter 20, ein Überströmventil 21, ein

...

gesteuertes Sicherheits- und Entlüftungsventil 22 und ein druckbetätigtes Unterbrechungsventil 23 verwendet. Diese Zusatzeinrichtung ist vorgesehen für die jeweilige Leerlaufphase des Kompressors 1, in der die Regenerationsluft des Behälters 20 über den Lufttrockner 19 und das Entlüftungsventil 22 ins Freie entlassen wird. Dabei ist die Verbindung zwischen Kompressor 1 und Filter 2 durch das Unterbrechungsventil 23 abgeriegelt. Dies ist notwendig, weil zur Regeneration des Lufttrockners 19 ein druckloses Ausströmen ins Freie erforderlich ist.

Die Figur 3 zeigt zusätzlich zur Bauart nach der Figur 1 einen Schalter 24, der beispielsweise vom Bremslichtschalter beeinflußt ist und durch die Betätigung der Bremse geschlossen wird. Damit überbrückt er die Schalter 14, 15 und 16 ungeachtet ihrer Stellung. Auf diese Weise wird auf jeden Fall beim Bremsen der Kompressor 1 auf Fördern geschaltet.

Die Figur 4 zeigt schließlich eine Bauart, bei der die Anlage bis zu den Vorratsbehältern 25 und 26 mit höherem als dem normalen Druck arbeitet. In den nachfolgenden Druckbegrenzern 27 und 28 wird wieder auf den normalen Betriebsdruck reduziert. Durch diese Bauweise ist ein größerer Druckbereich bei der Druckbeschaffung ausnützbar.

0119505

R. 18421 IP
21.6.1983 He/Wl

ROBERT BOSCH GMBH, 7000 Stuttgart 1

Ansprüche

1. Druckluftanlage von Fahrzeugen, insbesondere Druckluftbremsanlage, mit einem einen Luftvorratsbehälter speisenden Kompressor und einer die Förderung des Volumenstromes
des Kompressors steuernden Einrichtung, dadurch gekennzeichnet, daß der Volumenstrom des Kompressors (1) - wie an sich
bekannt - in pneumatischer Ansteuerung, außerdem aber noch
in elektrischer Aufschaltung vom Schiebe- und/oder Bremsbetrieb des Fahrzeuges ein- und ausschaltbar ist.

2. Druckluftanlage nach Anspruch 1, dadurch gekennzeichnet,
daß sowohl die pneumatische Ansteuerung als auch die elektrische Aufschaltung mit mindestens je einem Schaltventil
(11, 12) ausgerüstet sind und daß die Schaltventile (11, 12)
hintereinander geschaltet sind.

3. Druckluftanlage nach Anspruch 2, dadurch gekennzeichnet,
daß die Schaltventile (11, 12) 3/2-Wege-Ventile sind.

4. Druckluftanlage nach Anspruch 2 oder 3, dadurch gekennzeichnet, daß das Schaltventil (11) für die elektrische
Aufschaltung ein Magnetventil ist.

5. Druckluftanlage nach einem der Ansprüche 1 bis 4, dadurch
gekennzeichnet, daß für die elektrische Aufschaltung meh-

...

rere, den Schiebe- und/oder den Bremsbetrieb des Fahrzeuges erfassende Schalter (14, 15, 16, 17, 24) verwendet sind.

6. Druckluftanlage nach Anspruch 5, dadurch gekennzeichnet, daß zur Erfassung des Schiebebetriebes drei Schalter (14, 15, 16) verwendet sind, von denen der erste (14) von der Gaspedalstellung, der Regelstangenstellung einer Einspritzpumpe, der Drosselklappenstellung oder dem Saugrohrdruck, der zweite (15) von einem Drehzahl- oder von einem Geschwindigkeitsschalter und der dritte (16) von der Kupplungspedalstellung, der Gangschaltstellung oder von einer Zeitkonstanten beeinflußt sind.

7. Druckluftanlage nach Anspruch 5, dadurch gekennzeichnet, daß zur Erfassung des Schiebebetriebs und der Bremsung vier Schalter (14, 15, 16, 24) verwendet sind, von denen der erste (14) von der Gaspedalstellung, der Regelstangenstellung einer Einspritzpumpe, der Drosselklappenstellung oder dem Saugrohrdruck, der zweite (15) von einem Drehzahl- oder von einem Geschwindigkeitsschalter und der dritte (16) von der Kupplungspedalstellung, der Gangstellung oder von einer Zeitkonstanten und der vierte (24) vom Bremslichtschalter beeinflußt sind.

8. Druckluftanlage nach Anspruch 7, dadurch gekennzeichnet, daß der vierte Schalter (24) zu den drei anderen Schaltern (14, 15, 16) parallel geschaltet ist.

9. Druckluftanlage nach einem der Ansprüche 1 bis 8, dadurch gekennzeichnet, daß ein Schalter (17) zur druckabhängigen Überwachung der Schalter (14, 15, 16, 24) vorgesehen ist, der die Schalter-Ströme innerhalb eines Druckbereiches aktiviert.

# FIG. 1

FIG. 2

# FIG.3

## FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | DE-A-3 226 491 (DIESEL KIKI) <br><br> * Ganzes Dokument * <br><br> --- | 1,2,4-7,9 | B 60 T 17/02 |
| A | DE-B-2 655 585 (SWF) <br> * Spalte 3, Zeilen 31-39; Figur 1 * <br><br> --- | 1,7,8 | |
| D,A | DE-A-2 911 085 (KNORR-BREMSE) <br><br> ----- | | |

RECHERCHIERTE SACHGEBIETE (Int. Cl. 3)

B 60 T 17/00

Der vorliegende Recherchenbericht wurde für alle Patentansprüche erstellt.

| Recherchenort | Abschlußdatum der Recherche | Prüfer |
|---|---|---|
| BERLIN | 25-05-1984 | LUDWIG H J |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument